# EUROPEAN PATENT APPLICATION

(11) **EP 3 605 359 A1**
(43) Date of publication of application: **05.02.2020**
(21) Application number: 17906225.2
(22) Date of filing: 21.04.2017
(51) Int. Cl.: G06F 17/30

(54) **METHOD AND DEVICE FOR ACQUIRING COMPONENT RELATED DEMAND INFORMATION**

(71) Applicant: Siemens Aktiengesellschaft, 80333 München (DE)
(72) Inventor: SHEN, Yixuan, Shanghai 200093 (CN); CAO, Diansong, Beijing 100176 (CN)
(74) Representative: Isarpatent
(86) International application number: PCT/CN2017/081515
(87) International publication number: WO 2018/191979

(57) **Abstract**

A method and device for acquiring demand information of a component, the method comprising: acquiring model data information corresponding to the component (S101); converting the model data information into component format information (S102); and determining, on the basis of at least one component format information, demand information related to the component (S103). Compared with the prior art, the method and device have the following advantages: component information can be conveniently and automatically acquired and the component format information is automatically analyzed and classified, so that a current user demand and overall market trend are automatically determined, thus improving the accuracy of information analysis and greatly improving the efficiency for acquiring the demand information; and because the component can be analyzed by simply acquiring CAD information of a component model, the method and device have a better universality and are applicable to various different components.

## Description

### Technical field

The present invention relates to the field of the industrial Internet of Things, in particular to a method and device for acquiring demand information associated with a component.

### Background art

Market data is very important to all companies. Market data includes not only user demand, but also market trends in a particular field. At present, market information is usually acquired by carrying out questionnaire surveys and analysis of consumption data.

However, the main drawback of these two methods is that they lack universality; information and data on one product cannot be applied to another product, and is lacking somewhat in precision. Furthermore, the manual acquisition of data is not efficient enough.

### Content of the invention

In view of this, one problem solved by an embodiment of the present invention is the automatic acquisition of component demand information, thereby avoiding the problems of low efficiency and non-universality of information which are associated with the manual acquisition of demand information.

According to one aspect of the present invention, a method for acquiring demand information of a component is provided, wherein the method comprises the following steps:
- acquiring model data information corresponding to the component;
- converting the model data information to component format information;
   wherein the method further comprises the following step:
- determining demand information associated with the component on the basis of at least one component format information.

According to one aspect of the present invention, a demand acquisition device for acquiring demand information of a component is further provided, wherein the demand acquisition device comprises:
an acquiring apparatus, for acquiring model data information corresponding to the component;
a converting apparatus, for converting the model data information to component format information;
a determining apparatus, for determining demand information associated with the component on the basis of at least one component format information.

Compared with the prior art, the present invention has the following advantages: it can quickly and conveniently acquire component information automatically, and automatically analyse and classify component format information, and thereby automatically determine a current user demand and an overall market trend, increasing the precision of information analysis, and greatly improving the efficiency with which demand information is acquired; furthermore, since it is only necessary to acquire CAD information of a component model in order to analyse the component, the invention has good universality, and can be applied to various components.

### Description of the accompanying drawings

Other characteristics, features, advantages and benefits of the present invention will become more obvious through the following detailed description which makes reference to the accompanying drawings.
Fig. 1 is a structural block diagram of a demand acquisition device, for acquiring demand information of a component, of an evaluating component according to an embodiment of the present invention.
Fig. 2 is a flow chart of a method for acquiring demand information of a component according to an embodiment of the present invention.
Fig. 3 is a simplified schematic drawing of a mechanical arm according to an embodiment of the present invention.
Fig. 4 is a universal structural block diagram of a demand acquisition device according to an embodiment of the present invention.

### Particular embodiments

Preferred embodiments of the present disclosure are described in greater detail below with reference to the accompanying drawings. Although the drawings show preferred embodiments of the present disclosure, it should be understood that the present disclosure may be realized in various forms, and the embodiments expounded here should not impose any limitations. On the contrary, these embodiments are provided in order to make the present disclosure more thorough and complete, and can transmit the scope of the present disclosure in its entirety to those skilled in the art.

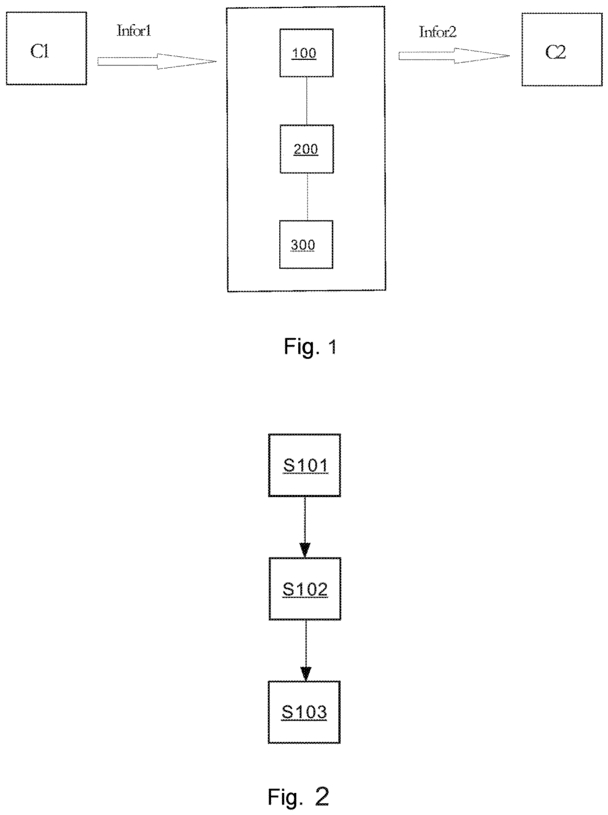

Referring to figs. 1 and 2, fig. 1 is a structural block diagram of a demand acquisition device, for acquiring demand information of a component, of an evaluating component according to an embodiment of the present invention; the demand acquisition device according to the present invention comprises an acquiring apparatus 100, a converting apparatus 200 and a determining apparatus 300. Fig. 2 is a flow chart of a method for acquiring demand information of a component according to an embodiment of the present invention.

According to an embodiment of the present invention, steps S101, S102 and S103 performed by the demand acquisition device are included.

The demand acquisition device receives model data information Infor1 from a user C1, and after performing steps S101 - S103, feeds back determined demand information Infor2 to a user C2.

Specifically, in step S101, the demand acquisition device acquires model data information corresponding to a component.

The model data information comprises data information corresponding to a component structure and/or function. For example, data information corresponding to a CAD model of the component, etc.

Preferably, the model data information comprises mesh information, etc.

For example, for a model of a table, this comprises 5 parts: a tabletop and 4 table corners, so the model comprises 5 sets of mesh information, each set of mesh information corresponding to one part, including relative position information of this part and other parts, and direction information, etc.

Since models in most formats can all be converted to mesh information via commonly used drawing software or specialized model software (e.g. Siemens NX software, etc.), those skilled in the art should be able to determine a method for converting a model to mesh information according to actual circumstances and demand; this is not described further superfluously here.

Specifically, the demand acquisition device acquires model data information uploaded by a user.

Preferably, the demand acquisition device acquires model data information that has been pre-processed by a user. For example, the user has added a corresponding comment in the model data information, for the demand acquisition device to identify.

For example, when it is not possible to automatically obtain complete component model data information, model data information added by a user may also be acquired.

Next, in step S102, the demand acquisition device converts the model data information to component format information.

The component format information comprises information having a relatively fixed format and capable of expressing a component structure and function etc. For example, a file using a predetermined xml format.

Specifically, on the basis of at least one information item contained in a predetermined format file, the demand acquisition device acquires data respectively corresponding to the at least one information item from the model data information, in order to generate component format information corresponding to the model data information.

For example, a set of xml files is pre-stored in the demand acquisition device; in the xml files, information items of possible attributes of a component are structurally organized; for a newly obtained model information, correspondences with the various attributes of the xml files in the model information are respectively determined, and data respectively corresponding to a portion of or all of the information items in the xml files will be acquired from the model information, in order to achieve the conversion of the model information to an xml file.

Preferably, the demand acquisition device reads, from mesh information, attribute information corresponding to various nodes in an xml file, in order to achieve conversion from model data information to the xml file.

The component format information comprises interface information and resource information corresponding to the component.

The interface information includes but is not limited to any one of the following items of sub-information:
1) an interface attribute;
2) an interface;
3) a connector.

Each item of sub-information may further comprise respective sub-information. For example, interface attribute information may further comprise at least one specific attribute; interface information may further comprise input sub-information and output sub-information; the connector may comprise e.g. attachment, device and track sub-information, etc.

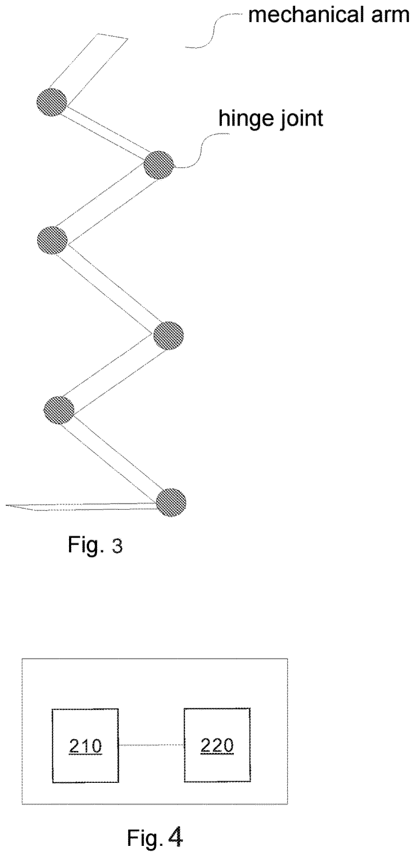

The resource information is used to indicate information such as a component structure and/or function. Preferably, the resource information includes but is not limited to any one of the following items:
1) Structure information; used to indicate the structural composition of a component, the structure information contains multiple information items corresponding to structures which might be contained in the component, such as a hinge joint, a sensor or a transport surface, etc.
   For example, for a mechanical arm (referring to fig. 3), information items such as "hinge joint" may be used in structure information thereof; for a sensor, information items such as "sensor" may be used in structure information thereof; for a conveyor belt component, information items such as "transport surface" are used in structure information thereof.
2) Control information. The control information is used to control a component to implement a corresponding operation. The control information may comprise each item of possible information corresponding to each type of structure of the component performing an operation.

For example, for a hinge joint structure, control information corresponding thereto may comprise position information and speed information, etc.; for example, for a transport surface structure, control information corresponding thereto may comprise speed information, etc.; for a sensor structure, control information corresponding thereto may comprise a specific trigger signal, e.g. a speed threshold or a temperature threshold, etc.

More specifically, the component format information further comprises function information.

The function information comprises functional function information instructing a component to implement a corresponding operation.

For example, referring to fig. 3, a mechanical arm has 7 hinge joints; in order to make an extremity of the mechanical arm move from a first position to a second position, the demand acquisition device runs a function in the function information, calculating new position points to which the 7 joints need to move as new position control information, thereby realizing movement of the mechanical arm.

According to an example of the present invention, the demand acquisition device uses an xml file to generate component format information, and the xml file uses a tree structure to perform organization. Three sub-nodes, namely interface (Interface), resource information (ResourceManager) and function information (FunctionBlock), are included below a root node, the code thereof being as shown below:

```
     <?xml version="1.0" encoding="UTF-8"?>
     - <Root>
       - <Interface>
         + <Property>
          <Port/>
          <Connector/>
         <Interface>
       - <ResourceManager>
         + <PositionControl>
       </ResourceManager>
       - <FunctionBlock>
         +<robot>
       </FunctionBlock>
       <ComponentGroup>testRobot</ComponentGroup>
       <InheritName>Assembly</InheritName>
     </Root >
```

In this section of code, the interface sub-node further comprises three sub-nodes: attribute (Property), port (Port) and connector (Connector); one sub-node is included below the resource sub-node: position control information (PositionControl); and one sub-node is included below the function information sub-node: robot (robot). Thus, during conversion, the demand acquisition device respectively acquires, in the model data information, information corresponding to the various nodes mentioned above, and takes an xml file resulting from the acquisition of corresponding data to be component format information corresponding to the component.

Next, in step S103, the demand acquisition device determines demand information associated with the component on the basis of at least one component format information.

The demand information includes but is not limited to any one of the following items:
1) user demand information, e.g. suppliers of which products the user might need, etc.
2) market trend information, e.g. products which are currently the focus of attention in the market, etc.

Specifically, ways in which the demand acquisition device determines demand information associated with the component on the basis of at least one component format information include but are not limited to any one of the following:
1) determining classification information of the component format information, in order to determine corresponding demand information on the basis of the classification information.
   Specifically, the demand acquisition device may perform classification on the basis of resource information in the component format information.
   For example, when it is determined that "sensor" structure information is contained in the resource information, it can be determined that the component is a sensor; as another example, when at least one "hinge joint" structure information and "position control" control information are contained in the resource information, it can be determined that the component is a mechanical arm; when "transport surface" structure information is contained in the resource information, it can be determined that the component is a conveyor belt; when "fixed joint" structure information is contained in the resource information, it can be determined that the component is tongs, etc.
   Preferably, the demand acquisition device may also perform classification in conjunction with function information in the component format information.
   For example, apart from on the basis of the structure information "sensor", the demand acquisition device further determines whether the function information contains an output to another component, and if so, determines that the component is a sensor.
   As another example, in addition to at least one "hinge joint" structure information and "position control" control information, it is further determined whether output information serving as "position control" is present in the function information, and if so, the component is determined to be a mechanical arm.
   In a preferred solution, the demand acquisition device determines a classification standard by machine learning on the basis of a large amount of component format information; and performs classification of the obtained component format information on the basis of the classification standard.
   Specifically, the demand acquisition device performs classification of the component format information on the basis of an initial preset classification standard, and performs correction of the classification standard according to class feedback information of a user for the classified component format information, thereby determining a relatively stable classification standard through learning of a large amount of data.
   For example, when determining whether a component having a "hinge joint" is a mechanical arm, the demand acquisition device determines the following to be a classification rule through learning of a large amount of data: when the number of "hinge joints" of a component ≥ 3, the component is a mechanical arm. Moreover, each component format information is subjected to determination on the basis of this determination standard.
   Next, the demand acquisition device determines demand information associated with the component according to the determined classification.
   For example, when a component is determined to be in the mechanical arm class, then due to the fact that a mechanical arm needs at least one electric motor in order to be driven, it is determined that a customer corresponding to the component has a need for an "electric motor" product.
2) The demand acquisition device establishes a search engine based on the component format information and the component simulation model corresponding thereto; and determines demand information according to query information and/or a search result obtained by the search engine.

According to a preferred solution of the present invention, the demand acquisition device also generates a component simulation model on the basis of the component format information, in order to perform simulated running.

Since the component format information already contains each item of information associated with the component and the running thereof, a simulation model may be established on the basis of the component format information, and simulated running may be performed.

The demand acquisition device establishes/updates a component database on the basis of the component format information obtained and the component simulation model corresponding thereto, and establishes a corresponding search engine on the basis of the component database. Next, the demand acquisition device determines associated component demand information according to query information inputted by at least one user in the search engine and/or a search result selected by at least one user.

For example, when it is determined through statistics that the query information "mechanical arm" is the query information inputted the greatest number of times within a period of time, then the demand acquisition device determines that a currently popular component is "mechanical arm".

As another example, when it is discovered through statistics that search results relating to sensors make up the majority of search results selected by users, it is determined that sensors are currently popular in the component market.

According to this solution, it is possible to quickly and conveniently acquire component information automatically, and automatically analyse and classify component format information, and thereby automatically determine a current user demand and an overall market trend, increasing the precision of information analysis, and greatly improving the efficiency with which demand information is acquired; furthermore, since it is only necessary to acquire CAD information of a component model in order to analyse the component, the solution has good universality, and can be applied to various components.

Referring to figs. 1 and 3, fig. 1 is a block diagram of a system for acquiring demand information of a component in an embodiment of the present invention; fig. 3 is a structural schematic drawing of a demand acquisition device for acquiring demand information of a component according to an embodiment of the present invention.

The demand acquisition device according to an embodiment of the present invention comprises an acquiring apparatus 100, a converting apparatus 200 and a determining apparatus 300.

The acquiring apparatus 100 acquires model data information corresponding to a component.

The model data information comprises data information corresponding to a component structure and/or function. For example, data information corresponding to a CAD model of the component, etc.

Preferably, the model data information comprises mesh information, etc.

For example, for a model of a table, this comprises 5 parts: a tabletop and 4 table corners, so the model comprises 5 sets of mesh information, each set of mesh information corresponding to one part, including relative position information of this part and other parts, and direction information, etc.

Since models in most formats can all be converted to mesh information via commonly used drawing software or specialized model software (e.g. Siemens NX software, etc.), those skilled in the art should be able to determine a method for converting a model to mesh information according to actual circumstances and demand; this is not described further superfluously here.

Specifically, the acquiring apparatus 100 acquires model data information uploaded by a user.

Preferably, the acquiring apparatus 100 acquires model data information that has been pre-processed by a user. For example, the user has added a corresponding comment in the model data information, for the demand acquisition device to identify.

Next, the converting apparatus 200 converts the model data information to component format information.

The component format information comprises information having a relatively fixed format and capable of expressing a component structure and function etc. For example, a file using a predetermined xml format.

Specifically, on the basis of at least one information item contained in a predetermined format file, the converting apparatus 200 acquires data respectively corresponding to the at least one information item from the model data information, in order to generate component format information corresponding to the model data information.

For example, a set of xml files is pre-stored in the demand acquisition device; in the xml files, information items of possible attributes of a component are structurally organized; for a newly obtained model information, the converting apparatus 200 respectively determines correspondences with the various attributes of the xml files in the model information, and will acquire data respectively corresponding to a portion of or all of the information items in the xml files from the model information, in order to achieve the conversion of the model information to an xml file.

Preferably, the demand acquisition device reads, from mesh information, attribute information corresponding to various nodes in an xml file, in order to achieve conversion from model data information to the xml file.

The component format information comprises interface information and resource information corresponding to the component.

The interface information includes but is not limited to any one of the following items of sub-information:
1) an interface attribute;
2) an interface;
3) a connector.

Each item of sub-information may further comprise respective sub-information. For example, interface attribute information may further comprise at least one specific attribute; interface information may further comprise input sub-information and output sub-information; the connector may comprise e.g. attachment, device and track sub-information, etc.

The resource information is used to indicate information such as a component structure and/or function. Preferably, the resource information includes but is not limited to any one of the following items:
1) Structure information; used to indicate the structural composition of a component, the structure information contains multiple information items corresponding to structures which might be contained in the component, such as a hinge joint, a sensor or a transport surface, etc.
   For example, for a mechanical arm, information items such as "hinge joint" may be used in structure information thereof; for a sensor, information items such as "sensor" may be used in structure information thereof; for a conveyor belt component, information items such as "transport surface" are used in structure information thereof.
2) Control information. The control information is used to control a component to implement a corresponding operation. The control information may comprise each item of possible information corresponding to each type of structure of the component performing an operation.

For example, for a hinge joint structure, control information corresponding thereto may comprise position information and speed information, etc.; for example, for a transport surface structure, control information corresponding thereto may comprise speed information, etc.; for a sensor structure, control information corresponding thereto may comprise a specific trigger signal, e.g. a speed threshold or a temperature threshold, etc.

More specifically, the component format information further comprises function information.

The function information comprises functional function information instructing a component to implement a corresponding operation.

For example, referring to fig. 3, a mechanical arm has 7 hinge joints; in order to make an extremity of the mechanical arm move from a first position to a second position, the demand acquisition device runs a function in the function information, calculating new position points to which the 7 joints need to move as new position control information, thereby realizing movement of the mechanical arm.

According to an example of the present invention, the converting apparatus 200 uses an xml file to generate component format information, and the xml file uses a tree structure to perform organization. Three sub-nodes, namely interface (Interface), resource information (ResourceManager) and function information (FunctionBlock), are included below a root node, the code thereof being as shown below:

```
     <?xml version="1.0" encodmg="UTF-8"?>
     - <Root>
        - <Interface>
          + <Property>
           <Port/>
           <Connector/>
         <Interface>
        - <ResourceManager>
          + <PositionControl>
        </ResourceManager>
        - <FunctionBlock>
          +<robot>
        </FunctionBlock>
        <ComponentGroup>testRobot</ComponentGroup>
        <InheritName>Assembly</InheritName>
     </Root >
```

In this section of code, the interface sub-node further comprises three sub-nodes: attribute (Property), port (Port) and connector (Connector); one sub-node is included below the resource sub-node: position control information (PositionControl); and one sub-node is included below the function information sub-node: robot (robot). Thus, during conversion, the converting apparatus 200 respectively acquires, in the model data information, information corresponding to the various nodes mentioned above, and takes an xml file resulting from the acquisition of corresponding data to be component format information corresponding to the component.

Those skilled in the art will understand that the component format information may employ any format of file capable of performing structural organization, and is not limited to the xml file format; this is not described further superfluously here.

Next, the determining apparatus 300 determines demand information associated with the component on the basis of at least one component format information.

The demand information includes but is not limited to any one of the following items:
1) user demand information, e.g. suppliers of which products the user might need, etc.
2) market trend information, e.g. products which are currently the focus of attention in the market, etc.

Specifically, ways in which the determining apparatus 300 determines demand information associated with the component on the basis of at least one component format information include but are not limited to any one of the following:
1) the determining apparatus 300 determining classification information of the component format information, in order to determine corresponding demand information on the basis of the classification information.
   Specifically, the determining apparatus 300 may perform classification on the basis of resource information in the component format information.
   For example, when it is determined that "sensor" structure information is contained in the resource information, it can be determined that the component is a sensor; as another example, when at least one "hinge joint" structure information and "position control" control information are contained in the resource information, it can be determined that the component is a mechanical arm; when "transport surface" structure information is contained in the resource information, it can be determined that the component is a conveyor belt; when "fixed joint" structure information is contained in the resource information, it can be determined that the component is tongs, etc.
   Preferably, the determining apparatus 300 may also perform classification in conjunction with function information in the component format information.
   For example, apart from on the basis of the structure information "sensor", the demand acquisition device further determines whether the function information contains an output to another component, and if so, determines that the component is a sensor.
   As another example, in addition to at least one "hinge joint" structure information and "position control" control information, it is further determined whether output information serving as "position control" is present in the function information, and if so, the component is determined to be a mechanical arm.
   In a preferred solution, the demand acquisition device determines a classification standard by machine learning on the basis of a large amount of component format information; and performs classification of the obtained component format information on the basis of the classification standard.
   Specifically, the demand acquisition device performs classification of the component format information on the basis of an initial preset classification standard, and performs correction of the classification standard according to class feedback information of a user for the classified component format information, thereby determining a relatively stable classification standard through learning of a large amount of data.
   For example, when determining whether a component having a "hinge joint" is a mechanical arm, the demand acquisition device determines the following to be a classification rule through learning of a large amount of data: when the number of "hinge joints" of a component ≥ 3, the component is a mechanical arm. Moreover, each component format information is subjected to determination by the determining apparatus 300 on the basis of this determination standard.
   Next, the determining apparatus 300 determines demand information associated with the component according to the determined classification.
   For example, when a component is determined to be in the mechanical arm class, then due to the fact that a mechanical arm needs at least one electric motor in order to be driven, it is determined that a customer corresponding to the component has a need for an "electric motor" product.
2) The determining apparatus 300 establishes a search engine, which is based on the component format information and the component simulation model corresponding thereto; and determines demand information according to query information and/or a search result obtained by the search engine.

According to a preferred solution of the present invention, the demand acquisition device also generates a component simulation model on the basis of the component format information, in order to perform simulated running.

Since the component format information already contains each item of information associated with the component and the running thereof, a simulation model may be established on the basis of the component format information, and simulated running may be performed.

The demand acquisition device establishes/updates a component database on the basis of the component format information obtained and the component simulation model corresponding thereto, and establishes a corresponding search engine on the basis of the component database. Next, the determining apparatus 300 determines associated component demand information according to query information inputted by at least one user in the search engine and/or a search result selected by at least one user.

For example, when it is determined through statistics that the query information "mechanical arm" is the query information inputted the greatest number of times within a period of time, then the determining apparatus 300 determines that a currently popular component is "mechanical arm".

As another example, when it is discovered through statistics that search results relating to sensors make up the majority of search results selected by users, it is determined that sensors are currently popular in the component market.

According to this solution, it is possible to quickly and conveniently acquire component information automatically, and automatically analyse and classify component format information, and thereby automatically determine a current user demand and an overall market trend, increasing the precision of information analysis, and greatly improving the efficiency with which demand information is acquired; furthermore, since it is only necessary to acquire CAD information of a component model in order to analyse the component, the solution has good universality, and can be applied to various components.

Each device and apparatus in fig. 1 may be realized using software, hardware (e.g. an integrated circuit, FPGA, etc.), or a combination of software and hardware.

Now referring to fig. 4, this shows a universal structural block diagram of a demand acquisition device according to an embodiment of the present invention. The demand acquisition device may comprise a memory 210 and a processor 220. The memory 210 may store an executable instruction. The processor 220 may realize operations executed by the various units in fig. 1 according to the executable instruction stored in the memory 210.

In addition, an embodiment of the present invention also provides a machine-readable medium, with an executable instruction stored thereon, wherein when the executable instruction is executed, a machine is caused to execute an operation realized by an evaluating device.

Those skilled in the art should understand that various modifications and changes may be made to the embodiments disclosed above without departing from the substance of the invention. Thus, the scope of protection of the present invention should be defined by the attached claims.

## Claims

1. A method for acquiring demand information of a component, wherein the method comprises the following steps:
- acquiring model data information corresponding to the component;
- converting the model data information to component format information;
wherein the method further comprises the following step:
- determining demand information associated with the component on the basis of at least one component format information.

2. The method as claimed in claim 1, the converting step comprising the following step:
- on the basis of at least one information item contained in a predetermined format file, acquiring data respectively corresponding to the at least one information item from the model data information, in order to generate component format information corresponding to the model data information.

3. The method as claimed in claim 1 or 2, wherein the component format information comprises interface information and resource information corresponding to the component.

4. The method as claimed in claim 3, wherein the resource information comprises at least one of the following items of information:
- structure information;
- control information.

5. The method as claimed in claim 3, wherein the component format information further comprises function information for realizing a function of the component.

6. The method as claimed in claim 1 or 2, wherein the method further comprises the following steps:
- extracting a classification standard on the basis of a large amount of component format information;
- performing classification of the component format information on the basis of the classification standard.

7. The method as claimed in claim 6, wherein the method further comprises the following step:
- determining demand information on the basis of classification information of the component format information.

8. The method as claimed in claim 1 or 2, wherein the method further comprises the following step:
- generating a component simulation model on the basis of the component format information, in order to perform simulated running.

9. The method as claimed in claim 8, wherein the method further comprises the following step:
- establishing a search engine based on the component format information and the component simulation model corresponding thereto;
wherein the method of determining component format information further comprises the following step:
- determining demand information according to query information and/or a search result obtained by the search engine.

10. A demand acquisition device for acquiring demand information of a component, wherein the demand acquisition device comprises:
an acquiring apparatus, for acquiring model data information corresponding to the component;
a converting apparatus, for converting the model data information to component format information;
a determining apparatus, for determining demand information associated with the component on the basis of at least one component format information.

11. The demand acquisition device as claimed in claim 10, the converting apparatus being further used for:
- on the basis of at least one information item contained in a predetermined format file, acquiring data respectively corresponding to the at least one information item from the model data information, in order to generate component format information corresponding to the model data information.

12. The demand acquisition device as claimed in claim 10 or 11, wherein the component format information comprises interface information and resource information corresponding to the component.

13. The demand acquisition device as claimed in claim 12, wherein the resource information comprises at least one of the following items of information:
- structure information;
- control information.

14. The demand acquisition device as claimed in claim 12, wherein the component format information further comprises function information for realizing a function of the component.

15. The demand acquisition device as claimed in claim 10 or 11, wherein the demand acquisition device is further used for:
- extracting a classification standard on the basis of a large amount of component format information;
- performing classification of the component format information on the basis of the classification standard.

16. The demand acquisition device as claimed in claim 15, wherein the determining apparatus is further used for:
- determining demand information on the basis of the component format information after classification.

17. The demand acquisition device as claimed in claim 10 or 11, wherein the demand acquisition device is further used for:
- generating a component simulation model on the basis of the component format information, in order to perform simulated running.

18. The demand acquisition device as claimed in claim 17, wherein the demand acquisition device is further used for:
- establishing a search engine based on the component format information and the component simulation model corresponding thereto;
wherein the determining apparatus is further used for:
- determining demand information according to query information and/or a search result obtained by the search engine.
